(19)

**Europäisches Patentamt**
**European Patent Office**
**Office européen des brevets**

(11)  **EP 4 482 923 B1**

(12)  **EUROPEAN PATENT SPECIFICATION**

(45) Date of publication and mention
of the grant of the patent:
**15.07.2026  Bulletin 2026/29**

(21) Application number: **23706819.2**

(22) Date of filing: **13.02.2023**

(51) International Patent Classification (IPC):
**C10L 5/44** *(2006.01)*

(52) Cooperative Patent Classification (CPC):
(C-Sets available)
**C10L 5/44; C08J 3/215; C08K 3/346;**
C08J 2397/00; C08J 2401/28; C08J 2405/00;
C08J 2429/04; C08J 2497/00; C10L 2250/04;
C10L 2250/06; C10L 2290/08; C10L 2290/24;
C10L 2290/30                                     (Cont.)

(86) International application number:
**PCT/FI2023/050090**

(87) International publication number:
**WO 2023/156710 (24.08.2023 Gazette 2023/34)**

(54)  **LIGNIN PELLETS AND METHOD FOR PRODUCTION**

LIGNINPELLETS UND METHODE ZUR HERSTELLUNG

GRANULÉS DE LIGNINE ET MÉTHODE DE PRODUCTION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **21.02.2022  FI 20225153**

(43) Date of publication of application:
**01.01.2025  Bulletin 2025/01**

(73) Proprietor: **UPM-Kymmene Corporation
00100 Helsinki (FI)**

(72) Inventors:
• **PYKÄLÄINEN, Nina**
**00100 Helsinki (FI)**
• **MIETTINEN, Mauno**
**00100 Helsinki (FI)**

(74) Representative: **Hoffmann Eitle
Patent- und Rechtsanwälte PartmbB
Arabellastraße 30
81925 München (DE)**

(56) References cited:
**US-A1- 2020 131 318**

• **DATABASE WPI Week 201531, 2015 Derwent
World Patents Index; AN 2015-27420M,
XP002809011**
• **RUEDA SERGIO A JAIMES ET AL: "Geometrical
parameters characterization of lignin pellets
made from poplar wood and corn stover
Reforming View project Scale-up of cellulose
conversion project for bioethanol production.
View project Geometrical parameters
characterization of lignin pellets made from
poplar wood and corn stover", CONFERENCE:
EUROPEAN PELLET CONFERENCE 2020AT:
WELS, AUSTRIA, 30 April 2020 (2020-04-30),
pages 1 - 10, XP093038504, Retrieved from the
Internet <URL:https://www.researchgate.net/
publication/342051887_Geometrical_paramete
rs_characterization_of_lignin_pellets_made_fro
m_poplar_wood_and_corn_stover> [retrieved
on 20230412], DOI: 10.13140/RG.2.2.10688.97287**

EP 4 482 923 B1

**(Cont. next page)**

(52) Cooperative Patent Classification (CPC): (Cont.)

C-Sets
**C08K 3/346, C08L 97/005;**
**C08L 97/005, C08L 1/286;**
**C08L 97/005, C08L 5/00;**
**C08L 97/005, C08L 29/04;**
**C08L 97/005, C08L 97/005**

## Description

### FIELD OF THE INVENTION

The present disclosure relates to a method for producing lignin pellets. The present disclosure further relates to lignin pellets.

### BACKGROUND OF THE INVENTION

Pellets are made from compressed organic matter or biomass. Pellets can be made from e.g. industrial waste and co-products, food waste, agricultural residues, energy crops, and virgin lumber. Wood pellets are a type of pellet generally made from compacted sawdust. There however remains a need for further biobased pellets having properties making them suitable for e.g. transportation, storage, and use. The pellets should be able to keep their form and not to break during transportation or storing. The pellets should also be able to tolerate changes in temperature and moisture during transportation and storing.

US 2020/0131318 discloses lignin pellets comprising fused lignin. Lignin pellets are also known from RU20130108354 and Rueda et al., European Pellet Conference, April 30, 2020, Wels Austria, pages 1-10 (DOI: 10.13140/RG.2.2.10688.97287).

### SUMMARY OF THE INVENTION

A method for producing lignin pellets is disclosed. The lignin pellets comprise lignin in an amount of 90 - 99.99 weight-% based on the total weight of the lignin pellets. The method comprises:

- providing a lignin powder having a dry matter content of 80 - 99 %;
- mixing an additive with the lignin powder to provide a mixed lignin powder, wherein the amount of additive mixed into the lignin powder is 0.1 - 10 weight-% based on the total weight of the mixed lignin powder;
- subjecting the mixed lignin powder to a pelletizing treatment at a temperature of 50 - 90 °C and under a pressure of 5.0 - 9.0 MPa to provide lignin pellets, wherein the lignin pellets have a diameter of 2.5 - 8 mm.

Further is disclosed a lignin pellet. The lignin pellet comprises lignin in an amount of 90 - 99.9 weight-% based on the total weight of the lignin pellet, and at least one additive, and wherein the lignin pellet has a diameter of 2.5 - 8 mm.

Further is disclosed a product comprising lignin pellets as defined in the current specification and fines in an amount of at most 7 weight-% based on the total weight of the lignin pellets and fines.

Further is disclosed the use of the lignin pellet as defined in the current specification for the production of a product comprising lignin pellets and fines in an amount of at most 7 weight-% passing through a sieve with 1.4mm aperture, based on the total weight of the lignin pellets and fines.

### BRIEF DESCRIPTION OF THE DRAWINGS

The accompanying drawing, which is included to provide a further understanding of the embodiments and constitutes a part of this specification, illustrates an embodiment. In the drawing:

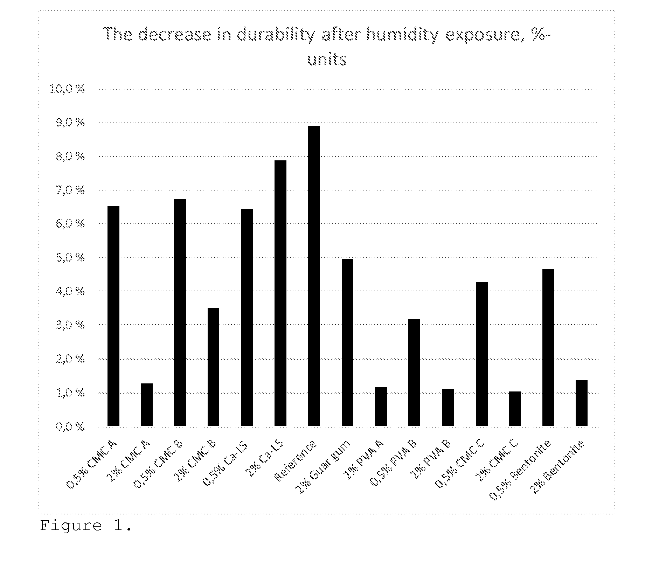

Fig. 1 discloses the results from the durability test in example 1.

### DETAILED DESCRIPTION

A method for producing lignin pellets, wherein the lignin pellets comprise lignin in an amount of 90 - 99.99 weight-% based on the total weight of the lignin pellets, is disclosed. The method comprises:

- providing a lignin powder having a dry matter content of 80 - 99%;
- mixing an additive with the lignin powder to provide a mixed lignin powder, wherein the amount of additive mixed into the lignin powder is 0.1 - 10 weight-% based on the total weight of the mixed lignin powder;
- subjecting the mixed lignin powder to a pelletizing treatment at a temperature of 50 - 90 °C and under a pressure of 5.0 - 9.0 MPa to provide lignin pellets, wherein the lignin pellets have a diameter of 2.5 - 8 mm.

Further is disclosed a lignin pellet comprising lignin in an amount of 90 - 99.9 weight-% based on the total weight of the lignin pellet, and at least one additive, and wherein the lignin pellet has a diameter of 2.5 - 8 mm.

Further is disclosed a product comprising lignin pellets as defined in the current specification and fines in an amount of at most 7 weight-% based on the total weight of the lignin pellets and fines.

Further is disclosed the use of the lignin pellet as defined in the current specification for the production of a product comprising lignin pellets and fines passing through a sieve with 1.4mm aperture in an amount of at most 7 weight-% based on the total weight of the lignin pellets and fines.

In one embodiment, bulk density of the lignin pellets is 0.4 - 0.7 kg/l. The bulk density of the lignin pellets may be used to describe the quality of the pellets. The bulk density may be determined with Powtec apparatus SMG 697 according to standard ISO 697:1981. Firstly, the clean and empty receiver is weighted to the nearest 0.1 g and placed into its correct position. Lignin pellets are poured into the hopper of the device while the locking plate is set to block their exit. Once the hopper is full, the locking plate is quickly moved and the material is let to overflow the receiver below. Once ready, the receiver surface is leveled by a straightedge and weighted again. Two replicates are carried out per each lignin pellet type. The bulk density of the sample is calculated according to below equation:

$$Apparent\ (bulk)\ density = \frac{m_3 - m_0}{V}$$

where

$m_3$ = mass of the receiver with its contents in g;
$m_0$ = mass of the empty receiver in g;
V = 500 ml (volume of the receiver).

In general pellets are produced by compressing the raw material or mixture. This mixture is fed to a press, where it is squeezed through a die having holes of the size required. In the production, also some amount of fines, i.e. loose raw material may be formed and end up among the pellets. When lignin is pelletized, the pressure and temperature of the pelletizing process affects the mixture such that the lignin plasticizes slightly, forming a natural "glue" that holds the pellet together as it cools.

The inventors surprisingly found out that by the method as disclosed in the current disclosure, one is able to produce lignin pellets that are durable for transportation and storage even in large quantities in e.g. a big bag, a silo etc.

In one embodiment, the lignin pellet is dispersible. The lignin pellet may be dispersible as such or after having been crushed. The inventors surprisingly found out that by producing lignin pellets as disclosed in the current disclosure, one is able to produce lignin pellets that are hard enough for being stored and transported in large quantities without adverse effects but at the same time is essentially easily dispersible in further use.

In one embodiment, the method comprises producing lignin pellets comprising lignin in an amount of 92 - 98 weight-%, or 95 - 97 weight-%, based on the total weight of the lignin pellets.

The method comprises providing lignin in the form of a powder, i.e. a lignin powder. The particle size of the lignin used in the form of the powder may fulfil the criteria of at least 80 weight-% of the lignin passing a 200 $\mu$m screen. I.e. 95 weight-% of the lignin particles have a size that is equal to or below 200 $\mu$m. In one embodiment, the particle size of the lignin used in the form of the powder fulfils the criteria of at least 95 weight-% of the lignin passing a 200 $\mu$m screen, or a 100 $\mu$m screen, or a 50 $\mu$m screen, or a 32 $\mu$m screen.

In one embodiment, the method comprises providing lignin powder having a dry matter content of 85 - 95 %, or 88 - 90 %. The dry matter content may be determined by drying a sample on an open dish in a heating chamber (1 g, 105 °C, 3 hours), until the mass of the sample remains constant. The dry matter content is the ratio of the mass of the sample after drying to the mass of the sample at the time of sample collection.

Providing a lignin powder having a dry matter content of 80 - 99 % has the added utility of one being able to produce lignin pellets having a sufficient durability for storing and transporting by affecting the amount of fines among the lignin pellets.

In the context of this specification, the term "lignin" may refer to lignin originating from any suitable lignin source. In one embodiment, the lignin is essentially pure lignin. By the expression "essentially pure lignin" should be understood as at least 70 % pure lignin, or at least 90 % pure lignin, or at least 95 % pure lignin, or at least 98 % pure lignin. The essentially pure lignin may comprise at most 30 %, or at most 10 %, or at most 5 %, or at most 2 %, of other components and/or impurities. Extractives and carbohydrates such as hemicelluloses can be mentioned as examples of such other components.

The lignin may contain less than 30 weight-%, or less than 10 weight-%, or less than 5 weight-%, or less than 3 weight-%, or less than 2.5 weight-%, or less than 2 weight-% of carbohydrates. The amount of carbohydrates present in lignin can be measured by high performance anion exchange chromatography with pulsed amperometric detector (HPAE-PAD) in accordance with standard SCAN-CM 71.

The ash percentage of lignin may be less than 7.5 weight-%, or less than 5 weight-%, or less than 3 weight-%, or less than 1.5 weight-%. The ash content can be determined in the following manner: Dry solid content of the sample is determined first in an oven at 105°C for 3h. Ceramic crucibles are pre-heated to 700 °C for 1 hour and weight after cooling. A sample (1.5 g - 2.5 g) is weighted into a ceramic crucible. The crucible with a lip is put into a cold oven. Temperature of the oven is raised: 20-200 °C, 30 min => 200-600 °C, 60 min => 600-700 °C, 60 min. Burning is continued without the lid at 700 °C for 60 min. The crucible is let to cool in desiccator and few drops of hydrogen peroxide ($H_2O_2$, 30 %) is added to the sample followed by burning in the oven at 700 °C for 30 minutes. If there are still dark spots in the ash, the hydrogen peroxide treatment and burning is repeated. The crucible is cooled down and weighted. All weigh-in is done with a precision of 0.1 mg and after cooling in a desiccator.

Calculation of the results

$$\text{Ash content \%} = (100\ a \times 100) / (b \times c)$$

wherein

a = weight of the ash, g
b = weight of the sample, g
c = dry solids of the sample, %

Ash content of a sample refers to the mass that remains of the sample after burning and annealing, and it is presented as percentage of the sample's dry content.

In one embodiment, the lignin is technical lignin. In the context of this specification, the term "technical lignin" may refer to lignin that is derived from lignin in any biomass by any technical process. In one embodiment, technical lignin is lignin received from an industrial process.

The lignin used for preparing the binder composition may be selected from a group consisting of kraft lignin, steam explosion lignin, biorefinery lignin, supercritical separation lignin, hydrolysis lignin, flash precipitated lignin, biomass originating lignin, lignin from alkaline pulping process, lignin from soda process, lignin from organosolv pulping, lignin from alkali process, lignin from enzymatic hydrolysis process, and any combination thereof. In one embodiment, the lignin is wood-based lignin. The lignin can originate from softwood, hardwood, annual plants or from any combination thereof.

By "kraft lignin" is to be understood in this specification, unless otherwise stated, lignin that originates from kraft black liquor. Black liquor is an alkaline aqueous solution of lignin residues, hemicellulose, and inorganic chemicals used in a kraft pulping process. The black liquor from the pulping process comprises components originating from different softwood and hardwood species in various proportions. Lignin can be separated from the black liquor by different, techniques including *e.g.* precipitation and filtration. Lignin usually begins precipitating at pH values below 11 - 12. Different pH values can be used in order to precipitate lignin fractions with different properties. These lignin fractions differ from each other by molecular weight distribution, *e.g.* Mw and Mn, polydispersity, hemicellulose and extractive contents. The molar mass of lignin precipitated at a higher pH value is higher than the molar mass of lignin precipitated at a lower pH value. Further, the molecular weight distribution of lignin fraction precipitated at a lower pH value is wider than of lignin fraction precipitated at a higher pH value. The precipitated lignin can be purified from inorganic impurities, hemicellulose and wood extractives using acidic washing steps. Further purification can be achieved by filtration.

The term "flash precipitated lignin" should be understood in this specification as lignin that has been precipitated from black liquor in a continuous process by decreasing the pH of a black liquor flow, under the influence of an over pressure of 200 - 1000 kPa, down to the precipitation level of lignin using a carbon dioxide based acidifying agent, preferably carbon dioxide, and by suddenly releasing the pressure for precipitating lignin. The method for producing flash precipitated lignin is disclosed in patent application FI 20106073. The residence time in the above method is under 300 s. The flash precipitated lignin particles, having a particle diameter of less than 2 $\mu$m, form agglomerates, which can be separated from black liquor using e.g. filtration. The advantage of the flash precipitated lignin is its higher reactivity compared to normal kraft lignin. The flash precipitated lignin can be purified and/or activated if needed for the further processing.

The lignin may be derived from an alkali process. The alkali process can begin with liquidizing biomass with strong alkali followed by a neutralization process. After the alkali treatment, the lignin can be precipitated in a similar manner as presented above.

The lignin may be derived from steam explosion. Steam explosion is a pulping and extraction technique that can be applied to wood and other fibrous organic material.

By "biorefinery lignin" is to be understood in this specification, unless otherwise stated, lignin that can be recovered from a refining facility or process where biomass is converted into fuel, chemicals and other materials.

By "supercritical separation lignin" is to be understood in this specification, unless otherwise stated, lignin that can be recovered from biomass using supercritical fluid separation or extraction technique. Supercritical conditions correspond to the temperature and pressure above the critical point for a given substance. In supercritical conditions, distinct liquid and gas phases do not exist. Supercritical water or liquid extraction is a method of decomposing and converting biomass into cellulosic sugar by employing water or liquid under supercritical conditions. The water or liquid, acting as a solvent, extracts sugars from cellulose plant matter and lignin remains as a solid particle.

The lignin may be derived from a hydrolysis process. The lignin derived from the hydrolysis process can be recovered from paper-pulp or wood-chemical processes.

The lignin may originate from an organosolv process. Organosolv is a pulping technique that uses an organic solvent to solubilize lignin and hemicellulose.

In one embodiment, the lignin consists of kraft lignin, such as softwood Kraft lignin. In one embodiment, the lignin is softwood Kraft lignin. In one embodiment, the lignin is a combination of softwood lignin and hardwood lignin. In one embodiment, at most 30 weight-%, or at most 25 weight-%, or at most 10 weight-%, or at most 5 weight % of the lignin originates from hardwood.

The weight average molecular weight of the softwood Kraft lignin may be 2500 - 9000 Da, or 3000 - 8000 Da, or 3500 - 7000 Da. The lignin, e.g. the Kraft lignin, may have a polydispersity index of 2.9 - 6.0, or 3.0 - 5.0, or 3.2 - 4.5.

The weight average molecular weight may be determined by using gel permeation chromatography (GPC) equipped with UV detector (280nm) in the following manner: A sample is dissolved into 0.1 M NaOH. The sample solution is filtered with 0.45 micron PTFE filter. The measurement is performed in 0.1 M NaOH eluent (0.5 ml/min, T = 30 °C) using PSS MCX precolumn, 1000 Å and 100 000 Å columns, with sulfonated styrene-divinylbenzene copolymer matrix. The molecular weight distribution of the sample is calculated in relation to Na-polystyrene sulfonate standards (6 pieces) Mw 891 - 65400. Values Mw (weight average molecular weight) and Mn (number average molecular weight), polydispersity index (PDI, Mw/Mn) are reported based on two parallel measurements.

The amount of alkali insoluble matter of the softwood Kraft lignin may be below 10 %, or below 5 %, or below 0.5 %. The amount of alkali insoluble matter may be determined in the following manner: Dry solid content of the sample is determined first in an oven at 105°C for 3h. 100 g of sample is dissolved into 277 g NaOH-water solution (pH 12 - 13) at mixed at 50 - 60 °C for 30 min. Solution is filtrated with a Büchner funnel through a glass filter. The residue on the filter is washed with 0.1M NaOH and finally with water. The filter with the residue is dried in an oven and then weighted. The amount of alkali insoluble matter is then calculated as follows:

Alkali insoluble matter, % = [weight of the filter with residue (dried) (g)- weight of the filter] / [weight of the sample (g) * dry solid content of the samples (%)]

The amount of condensed and syringul groups of softwood Kraft lignin may be below 3.0 mmol/g, or below 2.5 mmol/g, or below 2.0 mmol/g when determined with 31P NMR. The amount of aliphatic OH groups of softwood Kraft lignin may be below 3,0 mmol/g, or below 2.5 mmol/g when determined with 31P NMR. The amount of Guaiacyl OH of softwood Kraft lignin may be at least 1.5 mmol/g when determined with 31P NMR.

The measurements conducted with 31P NMR spectroscopy after phosphitylation can be used for quantitative determination of functional groups (aliphatic and phenolic hydroxyl groups, and carboxylic acid groups). Sample preparation and measurement are performed according to method by Granata and Argyropoulos (Granata, A., Argyropoulos, D., J. Agric. Food Chem. 1995, 43:1538-1544). Accurately weighted sample (~25 mg) is dissolved in N,N-dimethylformamide, and mixed with pyridine and internal standard solution (ISTD) endo-N-Hydroxy-5-norbornene-2,3-dicarboximide (e-HNDI). Phosphitylation reagent (200 µl) 2-chloro-4,4,5,5-tetramethyl-1,3,2-dioxapholane is added slowly, and finally a 300 µl $CDCl_3$ is added. NMR measurements are performed immediately after addition of the reagent. Spectra are measured with spectrometer, equipped with a broadband detection optimized probehead.

In one embodiment, providing the lignin powder comprises subjecting the lignin powder to a drying treatment. Drying of the lignin powder may have the added utility of enabling the production of lignin pellets having a suitable strength or durability. Using lignin powder having a too low dry matter content may provide lignin pellets exhibiting a durability that is too low for storage, transportation and/or further use. The drying of the lignin powder may be carried out by e.g. thermal drying. Providing the lignin powder may comprise subjecting the lignin powder to a drying treatment e.g. at a temperature of 70 - 140 °C provide lignin powder having the dry matter content of 80 - 99 %, or 85 - 95 %, or 88 - 90 %.

The drying treatment may be carried out in a drying device. Examples of a drying device are infrared dryer, microwave dryer, an indirect dryer, a direct dryer, a paddle dryer, a flash dryer, a fluidized bed dryer, a cyclone dryer, an air dryer, an air grinder, a rotor mill, a centrifugal mill, an air turbulence mill, or an air turbulence dryer. Also a combination of these may be used.

In one embodiment, providing the lignin powder does not comprise a drying treatment of the lignin powder.

In one embodiment, the amount of additive mixed into the lignin powder is 0.1 - 5 weight-%, or 0.5 - 3 weight-%, or 0.7 - 2.5 weight-%, or 1 - 1.8 weight-%, based on the total weight of the mixed lignin powder. This amount of additive used has the added utility that it does not essentially affect the end use of the produced lignin pellets in an adverse manner. Being able to use a lesser amount of additive further beneficially affects the costs, which will be lower. In one embodiment, the amount of additive is 0.1 - 5 weight-%, or 0.5 - 3 weight-%, or 0.7 - 2.5 weight-%, or 1 - 1.8 weight-%, based on the total weight of the lignin pellet.

The additive may be selected from a group consisting of starches, such as potato starch and corn starch; modified starches; carboxymethyl cellulose (CMC); guar gum (guar); carboxy methyl starch (CMS); lignosuphonates, such as ammonium-lignosuphonate and calcium-lignosulphonate; polyethylene glycol (PEG); diethylene glycol (DEG); glycols; glycerols; bentonite and other inorganic components; oils, such as a vegetable oil; flours, such as potato flour, rapeseed flour, and potato peel residue); other flours from plant-based residues; sodium silicate; polyvinyl alcohol (PVA); and proteins.

In one embodiment, the additive is at least one of carboxymethyl cellulose, lignosulfonate, polyethylene glycol, guar gum, polyvinyl alcohol (PVA), and bentonite. In one embodiment, the additive is at least one of carboxymethyl cellulose, polyvinyl alcohol (PVA), and bentonite. In one embodiment, the additive is carboxymethyl cellulose, polyvinyl alcohol (PVA), and bentonite.

In one embodiment, the method comprises mixing a lubricant with the lignin powder before subjecting the lignin powder to the pelletizing treatment. The lubricant may be water. In one embodiment, the method comprises mixing a lubricant with the lignin powder before subjecting the mixed lignin powder to the pelletizing treatment, wherein the lubricant is water and the amount of water mixed with the lignin powder is 1 - 10 weight-%, or 2 - 7 weight-%, or 4 - 6 weight-% based on the total weight of the mixed lignin powder. Using water as the lubricant has the added utility of lubricating lignin without being evenly spread throughout the lignin powder. The lubricant may thus assist in the formation of pellets of the lignin powder during the pelletizing treatment. The water may further act as a plasticizing agent. Using water may further have the added utility of hindering or reducing friction during the pelletizing treatment whereby a lower temperature may be used.

The pelletizing treatment may be carried out at a temperature of 50 - 90 °C, or 60 - 88 °C, or 65 - 87 °C, or 70 - 86 °C, or 75 - 85 °C, or 78 - 82 °C. The pelletizing treatment may be carried out under a pressure of 5.5 - 9.0 MPa, or 5.6 - 8.0 MPa, or 5.7 - 6.5 MPa, or 5.8 - 0.62 MPa. The temperature and the pressure used during the pelletizing treatment has the added utility of ensuring that the lignin pellets have a hardness value or durability that is suitable for further use.

The pelletizing treatment may be carried out in a pelletizing device. Examples of a pelletizing device are flat die pellet press or a ring die pellet press.

The flat die pellet press, or flat die pellet mill, as it may also be called uses a flat die with slots. The powder is introduced to the top of the die and as the die rotates a roller presses the powder through the holes in the die. A cutter on the other side of the die cuts the exposed pellet free from the die.

The basic pelleting principle of the ring die pellet mill is a simple operation where feed mass is distributed over the inner surface of a rotating, perforated die ahead of each roll, which compress the feed mass and compress it into the die holes to form pellets.

The diameter of the lignin pellets may be 2.5 - 8 mm, or 3.0 - 7.5 mm, or 3.5 - 7 mm, or 4 - 6.5 mm, or 4.5 - 6 mm. Providing lignin pellets with the minimum diameter of 2.5 mm has the added utility of producing durable lignin pellets.

In one embodiment, at most 7 weight-% of fines, based on the total weight of the lignin pellets and fines, are formed among the lignin pellets in the pelletizing treatment. Thus, among the produced or provided lignin pellets fines in an amount of at most 7 weight-% may be formed. At most 7 weight-%, or at most 6 weight-&, or at most 5 weight-%, or at most 4 weight-% of fines, based on the total weight of the lignin pellets and fines, may be formed among the lignin pellets in the pelletizing treatment. Thus, the product as defined in the current specification may comprise at most 7 weight-%, or at most 6 weight-&, or at most 5 weight-%, or at most 4 weight-% of fines based on the total weight of the lignin pellets and fines. The amount of fines may be determined by using a laboratory sieve shaker (Retsch) 1.4 mm aperture width test sieve (Retsch), placed on top of an empty bowl on the bottom. A 500 g sample of the produced pellets is weighted and poured onto the sieve and a lid is installed. The shaker is then set to vibrate in 50 Hz speed for 3 min, after which the remaining sample on the sieve and the fine content on the bottom bowl are weighted. Alternatively, the sieving may be carried out manually by shaking 5-10 times with circular movements. The fine content is expressed as percentage based on the following equation:

$$Fine\ content\ (\%) = \frac{W_{fines}}{W_{total}} * 100$$

where:

W fines = mass of the fines in g;
W total = the initial mass of the sample in g.

The inventors surprisingly found out that by the use of the additive, and possibly used lubricant, it may be provided lignin pellets, wherein the amount of fines among the lignin pellets, as a result of the pelletizing treatment, is sufficiently low to provide durable lignin pellets that can be e.g. stored and transported without an adverse effect on the lignin pellets.

In one embodiment, the decrease in durability of the provided lignin pellets is less than 8 %-units, or less than 7 %-units, or less than 6 %-units, or less than 5 %-units, or less than 4 %-units, or less than 3 %-units, or less than 2 %-units, or less than 1.5 %-units, after having stored the lignin pellets for 24 hours in relative humidity of 85 % at a temperature of 40 °C, when determined according to the durability test as described in the description. The relative humidity (RH) is the ratio of the actual water vapor pressure to the saturation water vapor pressure at the prevailing temperature.

The durability of the lignin pellets may be measured by a method based on the principle of ISO 17831-2:2015 (Determination of mechanical durability of pellets and briquettes. Part 2: Briquettes) with the below discussed differences: The lignin pellets are subjected to controlled shocks by collision against each other and against the walls of a rotating test chamber. The tester (or drum) is built from a 15.4-liter barrel to which internal surface two metal baffles are attached, facing each other and parallel to the axis of the drum. A 500 g sample of lignin pellets (sieved according to the above presented method for determining the amount of fines) is weighted (to nearest 0.1 g) and placed into the drum and the drum is closed. For rotation, the drum is places onto two rotating rollers with an electric motor capable of being constantly driven at approximately 36 r/min. The rotation of the lignin pellets is conducted for 30 min after which the drum is opened and the sample is poured onto laboratory sieve shaker with a 1.4 mm aperture width test sieves and the same procedure is repeated as above presented for the method for determining the amount of fines.

The durability is calculated according to the below equation from the mass of the sample remaining after separation of abraded and fine broken particles. The mechanical durability of pellets is calculated using the following formula:

$$DU = \frac{m_A}{m_E} x\ 100$$

where

DU = mechanical durability in %;
$m_A$ = mass of the pellets on the sieve after the tumbling treatment (g);
$m_E$ = is the mass of the pellets before the tumbling treatment (g).

The decrease in durability of the provided lignin pellets may then be calculated using the following formula:

Decrease in durability (in %-units) = 100 % - (DU in % of lignin pellets after humidity exposure/DU in % of produced lignin pellets before humidity exposure) * 100 %.

The method as disclosed in the current specification has the added utility of enabling the production of lignin pellets having a high amount of lignin. The expectation of pelletizing a powder of high lignin content has been that too hard plastic-resembling lignin pellets are formed that may not have usage in further applications. Thus, unexpectedly, the inventors found a method to produce high lignin content pellets having properties suitable for further application.

The lignin pellets as disclosed in the current application have the added utility of being easily transportable. The lignin pellets have the added utility of it being sufficiently hard in order to be able to store them in large quantities in e.g. large storage bags or silos. The lignin pellets have the added utility of being dispersible.

**EXAMPLES**

Reference will now be made in detail to various embodiments.

The description below discloses some embodiments in such a detail that a person skilled in the art is able to utilize the embodiments based on the disclosure. Not all steps or features of the embodiments are discussed in detail, as many of the steps or features will be obvious for the person skilled in the art based on this specification.

Example 1 - Producing lignin pellets and testing the same

In this example samples of lignin pellets were prepared with varying the used additive and its amount. In all the samples the lignin powder was the following: softwood kraft lignin with dry matter content of about 90 % when measured at 105 °C and a particle size fulfilling the criteria of at least 95 weight-% of the lignin passing a 32 $\mu$m screen. The following additives and their amounts were used:

Table 1.

| Sample number | Additive | Amount of additive (weight-%) |
|---|---|---|
| 1 | CMC A | 0.5 |
| 2 | CMC A | 2 |
| 3 | CMC B | 0.5 |
| 4 | CMC B | 2 |
| 5 | Ca-LS | 0.5 |
| 6 | Ca-LS | 2 |
| 7 | Reference | - |
| 8 | Guar gum | 2 |
| 9 | PVA A | 2 |
| 10 | PVA B | 0.5 |
| 11 | PVA B | 2 |
| 12 | CMC C | 0.5 |
| 13 | CMC C | 2 |
| 14 | Bentonite | 0.5 |
| 15 | Bentonite | 2 |

CMC=carboxymethylcellulose (A and B indicating CMC from the one and the same provider but different products, and C is from a different provider than A and B).
Ca-LS=calcium-lignosulphonate
Reference=Softwood kraft lignin
PVA=polyvinyl alcohol (A and B indicating PVA from the one and the same provider but different products)

The samples were prepared by mixing 10 kg of dry lignin powder (10 weight-% moisture content (MC)) with water and the additive in a high-speed Cyclomix 50 mixer (Hosokawa Micron B.V.) to adjust the moisture content of the lignin and the homogenous mixing of the additive. With water addition, the moisture content of the lignin was adjusted to 18 weight-% to reduce the risk of excessive temperature and dusting during pelletizing. The additives were added as presented in table 1 based on the weight (g) of the lignin powder in the adjusted moisture content. The dry lignin powder and the additive were first inserted into the mixer vessel and conditioned with nitrogen (2-3 bar) for 1 minute to reduce risk of dust explosion. After that, the mixer was started and set to 30 hertz (Hz) rotational speed and the water was poured steadily into the dry mixture through a hole in the vessel lid. Once the water addition was completed, the mixing was continued for 1 minute after which the mixture was moved into a separate container.

Then the mixed lignin powder was subjected to a pelletizing treatment carried out with a pilot size flat-die pellet press (type 14-175, KAHL) with two rollers of 130 mm in diameter. A pellet matrix with 4 mm die diameter and 16 mm die length (1:4 ratio) was chosen for the experiment. The roller gap was adjusted to 0.1-0.2 mm. Before pelletizing, the matrix was warmed up by feeding wet and/or slightly oily saw dust into the press until about 30-40 °C degrees output temperature was reached. For finalizing the warmup phase, few kilos of the test point lignin were circulated through the press to reach pellet temperature of 57-65 °C degrees. The temperature was monitored via handheld laser thermometer right after the pellets were released from the matrix. The 57-65 °C degrees pelleting threshold was found optimal based on test trials for the specific lignin type and moisture content used.

The pellet press was warmed up by friction in a speed of 63 Hz and once the threshold was reached, it was decreased to 40 Hz to slow down further heating. Thus, all test points were produced in uniform conditions of 40 Hz speed and 57-65 °C temperature.

The formed samples of provided lignin pellets were subjected to the following measurements:

<u>Pellet fine content</u>

The amount of fines was determined by using a laboratory sieve shaker (Retsch) with a 1.4 mm aperture width test sieve (Retsch), placed on top of an empty bowl, as described in this specification.

Durability

The durability of the lignin pellets was measured as described in this specification.

Durability after humidity exposure

The lignin pellets were conditioned in a climate chamber to simulate high humidity and high temperature storage conditions and their effect on pellet durability. The conditions were set to 85 % relative humidity (RH) and 40 °C degrees to represent possible weather conditions seen for example in Southern America.

Before starting the experiments, pellets were kept at laboratory storage conditions of ~20 °C and RH of 20-30 % in sealed containers. For the climate chamber (CLIMACELL® Evo), two 500 g portions from each lignin pellet type were weighted to the nearest 0.1 g and placed into individual aluminum trays without cover. The weight of each empty aluminum tray was also recorded. The pellets were then moved into the chamber and conditioned for 24 h.

After the treatment, each pellet tray was weighted, and their mass change was calculated (weight after chamber - weight before chamber) . The pellets were then immediately tested for durability as explained above.

The results are shown in Fig. 1 and in the below table:

Table 2

| Sample nro | Additive | Amount of additive (weight-%) | Durability of produced lignin pellets | Durability of lignin pellets after the humidity exposure | The decrease in durability after humidity exposure (%-units) |
|---|---|---|---|---|---|
| 1 | CMC A | 0.5 | 93.7 % | 87.6 % | 6.5 |
| 2 | CMC A | 2 | 96.0 % | 94.8 % | 1.3 |
| 3 | CMC B | 0.5 | 93.8 % | 87.5 % | 6.7 |
| 4 | CMC B | 2 | 93.4 % | 90.2 % | 3.5 |
| 5 | Ca-LS | 0.5 | 97.4 % | 91.1 % | 6.4 |
| 6 | Ca-LS | 2 | 95.3 % | 87.8 % | 7.9 |
| 7 | Reference | | 96.3 % | 87.7 % | 8.9 |
| 8 | Guar gum | 2 | 95.6 % | 90.9 % | 4.9 |
| 9 | PVA A | 2 | 93.5 % | 92.4 % | 1.1 |
| 10 | PVA B | 0.5 | 93.1 % | 90.2 % | 3.2 |
| 11 | PVA B | 2 | 93.4 % | 92.3 % | 1.1 |
| 12 | CMC C | 0.5 | 92.7 % | 88.7 % | 4.3 |
| 13 | CMC C | 2 | 94.2 % | 93.2 % | 1.0 |
| 14 | Bentonite | 0.5 | 95.7 % | 91.3 % | 4.6 |
| 15 | Bentonite | 2 | 93.2 % | 92.0 % | 1.3 |

When the value of decrease in durability after the humidity exposure tests is smaller the more stable are the lignin pellets.

Solubility

Lignin pellets were dissolved in NaOH (0.1 M) to determine their solubility. The solutions were prepared in concentration of 1 % through the addition of pellets (1 g±0.1 g) to a fixed volume of each organic solvent (100 ml) at room temperature (25 °C). Solutions were then magnetically stirred for 1 h, before being filtered (Paper 541, Whatman/GE Healthcare, China), placed into an aluminum tray and dried in a drying oven at 60°C overnight (~18 h). The procedure was repeated for a second sample for each pellet type.

The solubility was determined based on the insoluble remnants, according to following formula:

$$Solubility\% = \frac{(m_{initial} - m_{filtered})}{m_{initial}} \; x \; 100$$

where

$m_{initial}$ = mass of the sample before solubility test in g;
$m_{filtered}$ = mass of the remaining dry sample in g.

The results are shown in the below table:

Table 3.

| Sample nro | Additive | Amount of additive (weight-%) | Solubility (%) |
|---|---|---|---|
| 1 | CMC A | 0.5 | 99.8 |
| 2 | CMC A | 2 | 98.3 |
| 3 | CMC B | 0.5 | 99.7 |
| 4 | CMC B | 2 | 99.1 |
| 5 | Ca-LS | 0.5 | 99.7 |
| 6 | Ca-LS | 2 | 99.5 |
| 7 | Reference | | 99.5 |
| 8 | Guar gum | 2 | 96.4 |
| 9 | PVA A | 2 | 99.3 |
| 10 | PVA B | 0.5 | 97.8 |
| 11 | PVA B | 2 | 99.0 |
| 12 | CMC C | 0.5 | 99.8 |
| 13 | CMC C | 2 | 98.9 |
| 14 | Bentonite | 0.5 | 99.8 |
| 15 | Bentonite | 2 | 99.9 |

From the above results one may conclude that the produced lignin pellets are readily dispersible.

Example 2 - Producing lignin pellets

In this example a sample of lignin pellets was prepared by using softwood kraft lignin with dry matter content of about 90 % when measured at 105 °C and a particle size fulfilling the criteria of at least 95 weight-% of the lignin passing a 32 μm screen.

Carboxymethyl cellulose was used as the additive in an amount of 3 weight-% based on the total weight of the mixed lignin powder. The sample was prepared by mixing 1000 kg of dry lignin powder (10 weight-% moisture content) with water and the additive. The moisture content of the mixed lignin powder was 15 %.

Then the mixed lignin powder was subjected to a pelletizing treatment carried out with a pellet press 33-390 (Amandus Kahl GmbH). The pellet press was warmed up to 40 Hz. A temperature of 83 °C and a hydraulic pressure of 6.5 MPa were used for the pelletizing treatment. Pellets with a diameter of 4 mm were formed.

The pellets had a bulk density of 0.58 kg/l, a moisture content of 14 weight-%, and the amount of fines among the lignin pellets was 1.5 % (in this test a 2.8 mm sieve was used instead of the above described 1.4 mm and the sieving was conducted manually).

Example 3 - Producing lignin pellets

In this example a sample of lignin pellets was prepared by using softwood kraft lignin with dry matter content of about 85 % when measured at 105 °C and a particle size fulfilling the criteria of at least 95 weight-% of the lignin passing a 32 μm screen.

Carboxymethyl cellulose was used as the additive in an amount of 3 weight-% based on the total weight of the mixed lignin powder. The sample was prepared by mixing the dry lignin powder (10 weight-% moisture content) and the additive. Then the mixed lignin powder was subjected to a pelletizing treatment.

It is obvious to a person skilled in the art that with the advancement of technology, the basic idea may be implemented in various ways. The embodiments are thus not limited to the examples described above; instead they may vary within the scope of the claims.

The embodiments described hereinbefore may be used in any combination with each other. Several of the embodiments may be combined together to form a further embodiment. A method, a lignin pellet, a product, and use, disclosed herein, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature(s) or act(s) followed thereafter, without excluding the presence of one or more additional features or acts.

## Claims

1.    A method for producing lignin pellets, wherein the lignin pellets comprise lignin in an amount of 90 - 99.9 weight-% based on the total weight of the lignin pellets, wherein the method comprises:

     - providing a lignin powder having a dry matter content of 80 - 99%;
     - mixing an additive with the lignin powder to provide a mixed lignin powder, wherein the amount of additive mixed into the lignin powder is 0.1 - 10 weight-% based on the total weight of the mixed lignin powder;
     - subjecting the mixed lignin powder to a pelletizing treatment at a temperature of 50 - 90 °C and under a pressure of 5.0 - 9.0 MPa;

     to provide lignin pellets, wherein the lignin pellets have a diameter of 2.5 - 8 mm.

2.    The method of claim 1, wherein the method comprises producing lignin pellets comprising lignin in an amount of 92 - 98 weight-%, or 95 - 97 weight-%, based on the total weight of the lignin pellets.

3.    The method of any one of the preceding claims, wherein the method comprises providing a lignin powder having a dry matter content of 85 - 95 %, or 88 - 90 %.

4.    The method of any one of the preceding claims, wherein the amount of additive mixed into the lignin powder is 0.1 - 5 weight-%, or 0.5 - 3 weight-%, or 0.7 - 2.5 weight-%, or 1 - 1.8 weight-%, based on the total weight of the mixed lignin powder.

5.    The method of any one of the preceding claims, wherein the additive is at least one of carboxymethyl cellulose, lignosulfonate, polyethylene glycol, guar gum, polyvinyl alcohol, and bentonite.

6.    The method of any one of the preceding claims, wherein the method comprises mixing a lubricant with the lignin powder before subjecting the mixed lignin powder to the pelletizing treatment, wherein the lubricant is water and the amount of water mixed with the lignin powder is 1 - 10 weight-%, or 2 - 7 weight-%, or 4 - 6 weight-% based on the total weight of the mixed lignin powder.

7.    The method of any one of the preceding claims, wherein the bulk density of the lignin pellets as determined by ISO 697/1981 is 0.4 - 0.7 kg/l.

8.    The method of any one of the preceding claims, wherein the diameter of the lignin pellets is 3.0 - 7.5 mm, or 3.5 - 7 mm, or 4 - 6.5 mm, or 4.5 - 6 mm.

9.    The method of any one of the preceding claims, wherein at most 7 weight-% of fines passing through a sieve with 1.4mm aperture, based on the total weight of the lignin pellets and fines, are formed among the lignin pellets in the pelletizing treatment.

10.  A lignin pellet obtainable according to any one of claims 1 to 9.

**Patentansprüche**

1. Verfahren zur Herstellung von Ligninpellets, wobei die Ligninpellets Lignin in einer Menge von 90-99,9 Gew.-%, bezogen auf das Gesamtgewicht der Ligninpellets, umfassen, wobei das Verfahren umfasst:

   - Bereitstellen eines Ligninpulvers mit einem Trockenmassegehalt von 80-99 %,
   - Mischen eines Additivs mit dem Ligninpulver, um ein Mischligninpulver bereitzustellen, wobei die Menge des Additivs, das in das Ligninpulver eingemischt wird, 0,1-10 Gew.-%m, bezogen auf das Gesamtgewicht des Mischligninpulvers, beträgt,
   - Unterziehen des Mischligninpulvers einer Pelletierbehandlung bei einer Temperatur von 50-90°C unter einem Druck von 5,0-9,0 MPa,

   um Ligninpellets bereitzustellen, wobei die Ligninpellets einen Durchmesser von 2,5-8 mm aufweisen.

2. Verfahren gemäß Anspruch 1, wobei das Verfahren das Herstellen von Ligninpellets umfasst, die Lignin in einer Menge von 92-98 Gew.-% oder 95-97 Gew.-%, bezogen auf das Gesamtgewicht der Ligninpellets, umfassen.

3. Verfahren nach einem der vorhergehenden Ansprüche, wobei das Verfahren das Bereitstellen eines Ligninpulvers mit einem Trockenmassegehalt von 85-95 % oder 88-90 % umfasst.

4. Verfahren nach einem der vorhergehenden Ansprüche, wobei die Menge des in das Ligninpulver eingemischten Additivs 0,1-5 Gew.-% oder 0,5-3 Gew.-% oder 0,7-2,5 Gew.-%oder 1-1,8 Gew.-%, bezogen auf das Gesamtgewicht des Mischligninpulvers, beträgt.

5. Verfahren nach einem der vorhergehenden Ansprüche, wobei das Additiv mindestens eines von Carboxymethylcellulose, Lignosulfonat, Polyethylenglykol, Guargummi, Polyvinylalkohol und Bentonit ist.

6. Verfahren nach einem der vorhergehenden Ansprüche, wobei das Verfahren das Mischen eines Schmiermittels mit dem Ligninpulver vor dem Unterziehen des Mischligninpulvers einer Pelletierbehandlung umfasst, wobei das Schmiermittel Wasser ist und die Menge an Wasser, das mit dem Ligninpulver gemischt wird, 1-10 Gew.-% oder 2-7 Gew.-% oder 4-6 Gew.-%, bezogen auf das Gesamtgewicht des Mischligninpulvers, beträgt.

7. Verfahren nach einem der vorhergehenden Ansprüche, wobei die Schüttdichte der Ligninpellets, bestimmt durch ISO 697/1981, 0,4-0,7 kg/l beträgt.

8. Verfahren nach einem der vorhergehenden Ansprüche, wobei der Durchmesser der Ligninpellets 3,0-7,5 mm oder 3,5-7 mm oder 4-6,5 mm oder 4,5-6 mm beträgt.

9. Verfahren nach einem der vorhergehenden Ansprüche, wobei höchstens 7 Gew.-% Feinanteil, der ein Sieb mit einer Öffnung von 1,4 mm passiert, bezogen auf das Gesamtgewicht der Ligninpellets und des Feinanteils, unter den Ligninpellets in der Pelletierbehandlung gebildet werden.

10. Ligninpellets, erhältlich gemäß einem der Ansprüche 1 bis 9.

**Revendications**

1. Procédé de production de granulés de lignine, dans lequel les granulés de lignine comprennent de la lignine en une quantité de 90 à 99,9 % en poids sur la base du poids total des granulés de lignine, dans lequel le procédé comprend le fait de :

   - fournir une poudre de lignine présentant une teneur en matière sèche de 80 à 99 % ;
   - mélanger un additif avec la poudre de lignine pour fournir une poudre de lignine mélangée, dans lequel la quantité d'additif mélangée dans la poudre de lignine est de 0,1 à 10 % en poids sur la base du poids total de la poudre de lignine mélangée ;
   - soumettre la poudre de lignine mélangée à un traitement de granulage à une température de 50 à 90 °C et sous une pression de 5,0 à 9,0 MPa ;

pour fournir des granulés de lignine, dans lequel les granulés de lignine présentent un diamètre de 2,5 à 8 mm.

2. Procédé selon la revendication 1, dans lequel le procédé comprend le fait de produire des granulés de lignine comprenant de la lignine en une quantité de 92 à 98 % en poids, ou 95 à 97 % en poids, sur la base du poids total des granulés de lignine.

3. Procédé selon l'une quelconque des revendications précédentes, dans lequel le procédé comprend le fait de fournir une poudre de lignine présentant une teneur en matière sèche de 85 à 95 %, ou 88 à 90 %.

4. Procédé selon l'une quelconque des revendications précédentes, dans lequel la quantité d'additif mélangée dans la poudre de lignine est de 0,1 à 5 % en poids, ou 0,5 à 3 % en poids, ou 0,7 à 2,5 % en poids, ou 1 à 1,8 % en poids, sur la base du poids total de la poudre de lignine mélangée.

5. Procédé selon l'une quelconque des revendications précédentes, dans lequel l'additif est au moins l'un parmi la carboxyméthylcellulose, le lignosulfonate, le polyéthylène glycol, la gomme de guar, l'alcool polyvinylique et la bentonite.

6. Procédé selon l'une quelconque des revendications précédentes, dans lequel le procédé comprend le fait de mélanger un lubrifiant avec la poudre de lignine avant de soumettre la poudre de lignine mélangée au traitement de pastillage, dans lequel le lubrifiant est de l'eau et la quantité d'eau mélangée avec la poudre de lignine est de 1 à 10 % en poids, ou 2 à 7 % en poids, ou 4 à 6 % en poids, sur la base du poids total de la poudre de lignine mélangée.

7. Procédé selon l'une quelconque des revendications précédentes, dans lequel la masse volumique apparente des granulés de lignine telle que déterminée selon ISO 697/1981 est de 0,4 à 0,7 kg/l.

8. Procédé selon l'une quelconque des revendications précédentes, dans lequel le diamètre des granulés de lignine est de 3,0 à 7,5 mm, ou 3,5 à 7 mm, ou 4 à 6,5 mm, ou 4,5 à 6 mm.

9. Procédé selon l'une quelconque des revendications précédentes, dans lequel au plus 7 % en poids de fines passant à travers un tamis avec une ouverture de 1,4 mm, sur la base du poids total des granulés de lignine et des fines, se forment parmi les granulés de lignine dans le traitement de granulage.

10. Granulé de lignine pouvant être obtenu selon l'une quelconque des revendications 1 à 9.

The decrease in durability after humidity exposure, %-units

Figure 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200131318 A
- RU 20130108354

- FI 20106073

**Non-patent literature cited in the description**

- **RUEDA et al.** *European Pellet Conference*, 30 April 2020, 1-10

- **GRANATA, A** ; **ARGYROPOULOS, D.** *J. Agric. Food Chem.*, 1995, vol. 43, 1538-1544